(19) Europäisches Patentamt / European Patent Office / Office européen des brevets

(11) **EP 4 475 357 A1**

(12) **EUROPEAN PATENT APPLICATION**
published in accordance with Art. 153(4) EPC

(43) Date of publication:
**11.12.2024 Bulletin 2024/50**

(21) Application number: **22924774.7**

(22) Date of filing: **03.02.2022**

(51) International Patent Classification (IPC):
*H01S 3/067* (2006.01)

(52) Cooperative Patent Classification (CPC):
H01S 3/067

(86) International application number:
**PCT/JP2022/004159**

(87) International publication number:
**WO 2023/148863 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nippon Telegraph And Telephone
Corporation
Chiyoda-ku
Tokyo 100-8116 (JP)**

(72) Inventors:
• **IMADA, Ryota**
  **Musashino-shi, Tokyo 180-8585 (JP)**
• **SAKAMOTO, Taiji**
  **Musashino-shi, Tokyo 180-8585 (JP)**
• **AOZASA, Shinichi**
  **Musashino-shi, Tokyo 180-8585 (JP)**
• **NAKAJIMA, Kazuhide**
  **Musashino-shi, Tokyo 180-8585 (JP)**

(74) Representative: **v. Bezold & Partner
Patentanwälte - PartG mbB
Ridlerstraße 57
80339 München (DE)**

(54) **RARE-EARTH-DOPED FIBER, OPTICAL AMPLIFIER, AND METHOD FOR CONTROLLING OPTICAL AMPLIFIER**

(57) An object of the present disclosure is to reduce mode-dependent gain characteristics in an optical amplifier using a coupled multi-core fiber.

An optical amplifier of the present disclosure includes a rare-earth doped fiber including a plurality of cores, in which a v value of the plurality of cores of the rare-earth doped fiber is less than 2.405, the plurality of cores has a core pitch of a normalized coupling coefficient of $1.0 \times 10^{-3}$ or more, and on injection of excitation light into a clad part of the rare-earth doped fiber in a state of being bent at a predetermined bending radius, propagating light in the rare-earth doped fiber is amplified with mode-dependent gain characteristics dependent on the bending radius.

Fig. 1

EP 4 475 357 A1

## Description

Technical Field

The present disclosure relates to a rare-earth doped fiber, an optical amplifier using the rare-earth doped fiber, and a method of controlling the optical amplifier.

Background Art

A coupled multi-core fiber (MCF) has excellent mode dispersion characteristics produced by random coupling, and thus has attracted attention as an optical fiber for space division multiplexing (SDM) suitable for long-distance large-capacity transmission. In order to realize long-distance transmission using a coupled MCF, an optical amplification relay technology is required, and studies have been made to apply the coupled MCF to an optical amplifier [refer to Non Patent Literature 1, for example].

In a transmission system using a coupled MCF, a mode dependent gain (MDG) in an optical amplifier is a problem. According to Non Patent Literature 1, the MDG in the optical amplifier is an important constraint factor on a transmission distance of the transmission system using the coupled MCF.

Citation List

Non Patent Literature

Non Patent Literature 1: T. Sakamoto et al., "Characteristics of Randomly Coupled 12-core Erbium-Doped Fiber Amplifier," J. Light. Technol., vol. 39, no. 4, pp.1186-1193, 2021.

Summary of Invention

Technical Problem

Therefore, an object of the present disclosure is to reduce mode-dependent gain characteristics in an optical amplifier using a coupled multi-core fiber.

Solution to Problem

In the present disclosure, a rare-earth doped fiber, in which each core operates in a single mode and a localization ratio of modes is restricted, is applied to an optical amplifier.

Specifically, a rare-earth doped fiber of the present disclosure is a rare-earth doped fiber including a plurality of cores, in which a v value of the plurality of cores is less than 2.405, and the plurality of cores has a core pitch of a normalized coupling coefficient of $1.0 \times 10^{-3}$ or more.

An optical amplifier of the present disclosure includes the rare-earth doped fiber according to the present disclosure, and amplifies propagating light in the rare-earth doped fiber, with mode-dependent gain characteristics dependent on a predetermined bending radius, on injection of excitation light into a clad part of the rare-earth doped fiber in a state of being bent at the bending radius.

A method of the present disclosure is a method of controlling the optical amplifier of the present disclosure and includes reducing the mode-dependent gain characteristics by bending at the predetermined bending radius.

Advantageous Effects of Invention

According to the present disclosure, mode-dependent gain characteristics in an optical amplifier using a coupled multi-core fiber can be reduced.

Brief Description of Drawings

Fig. 1 illustrates a configuration example of an optical amplifier of the present disclosure.
Fig. 2 illustrates an example of conditions under which each core operates in a single mode.
Fig. 3 illustrates an example of a refractive index distribution of a rare-earth doped fiber of the present disclosure.

Fig. 4 illustrates a configuration example of an MDG measurement system regarding an EDF.

Fig. 5 illustrates MDG calculation results.

Fig. 6 illustrates a relationship between a localization ratio and a normalized coupling coefficient $\kappa_n$ in a linear state.

Fig. 7 illustrates examples of core structures.

Fig. 8 illustrates a relationship between a localization ratio and a normalized coupling coefficient $\kappa_n$ in a plurality of examples regarding a v value.

Fig. 9 illustrates a relationship between a bending radius R and a localization ratio $|\Gamma e/\Gamma o|$ at a certain v value and $\kappa_n$.

Fig. 10 illustrates an example of a relationship between a core pitch $\Lambda$ and a bending radius R satisfying $|\Gamma e/\Gamma o| = 0.02$ dB.

Fig. 11 illustrates an example of a relationship between a v value and coefficients a and b.

Fig. 12 illustrates a relationship between a core pitch $\Lambda$ and a bending radius R satisfying $|\Gamma e/\Gamma o| = 0.08$ dB.

Fig. 13 illustrates an example of a relationship between a v value and coefficients a and b.

Fig. 14 illustrates a configuration example of a transmission system to which an optical amplifier of the present disclosure is applied.

Description of Embodiments

Hereinafter, embodiments of the present disclosure will be described in detail with reference to the drawings. Note that the present disclosure is not limited to the following embodiments. These examples are merely examples, and the present disclosure can be implemented in a form with various modifications and improvements based on the knowledge of those skilled in the art. Note that components having the same reference numerals in the present specification and the drawings indicate the same components.

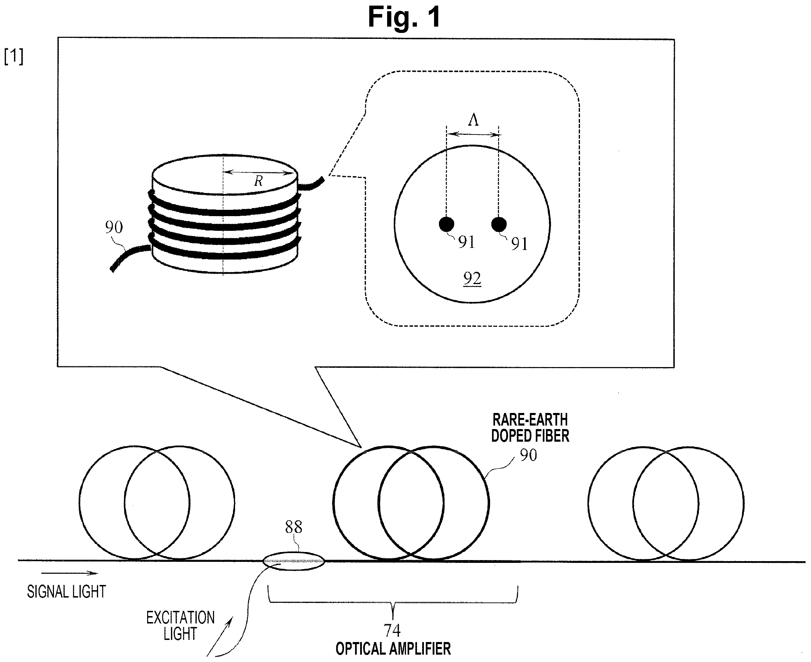

Fig. 1 illustrates an overview of the present disclosure. In the present disclosure, a bending radius R of a rare-earth doped fiber 90 is appropriately controlled in an optical amplifier 74 that performs amplification by injecting excitation light into the rare-earth doped fiber 90 via a coupler 88. In studies on conventional coupled optical amplifiers (for example, Non Patent Literature 1), optimization aiming at improvement of excitation efficiency has been performed, but there has been no study from the viewpoint of MDG control. In the present disclosure, it is clarified that, in addition to the structure of cores 91 disposed in a clad 92, the bending state affects the MDG, and the MDG is restricted by applying an appropriate bending radius R dependent on a core pitch $\Lambda$ and the core structure of the rare-earth doped fiber 90. Hereinafter, in the present disclosure, as an embodiment, an example in which the rare-earth doped fiber 90 is an erbium doped fiber (EDF) and two cores 91 are disposed in the clad 92 will be described.

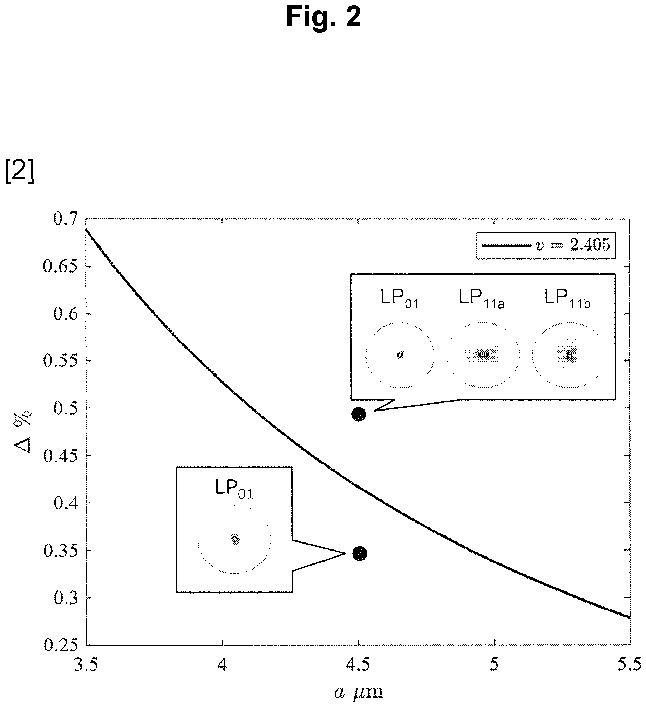

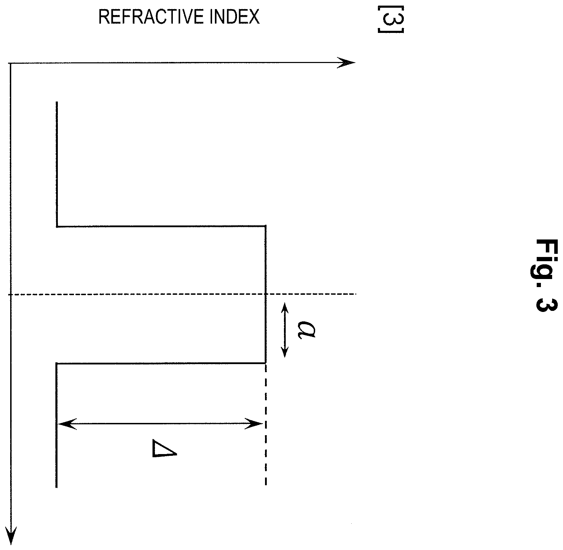

Fig. 2 illustrates an example of a condition under which each core operates in a single mode. Fig. 2 illustrates a relationship between a core radius a and a relative refractive index difference $\Delta$, for the sake of a v value of a step index type fiber having a refractive index distribution, as illustrated in Fig. 3, satisfying v = 2.405.

Here, the v value is a parameter v in a core of an optical fiber and is calculated by Expression (1).

[Math. 1]

$$v = \frac{2\pi a}{\lambda_0} n_1 \sqrt{2\Delta} \qquad (1)$$

The parameters are as follows.

a: core radius of EDF 90
$\lambda_0$: wavelength used (wavelength in vacuum)
$n_1$: refractive index of cores 91 of EDF 90
$\Delta$: relative refractive index difference of EDF 90

Fig. 2 also illustrates an electric field distribution of a guided mode. In Fig. 2, only the LP01 mode propagates in the region below the solid line. On the other hand, a higher-order mode propagates in the region above the solid line. Therefore, in order to perform a single mode operation, the region needs to be a region below the solid line on which the v value is 2.405. From the above, the v value needs to satisfy the condition of v < 2.405 in order to get each core behaving in the single mode.

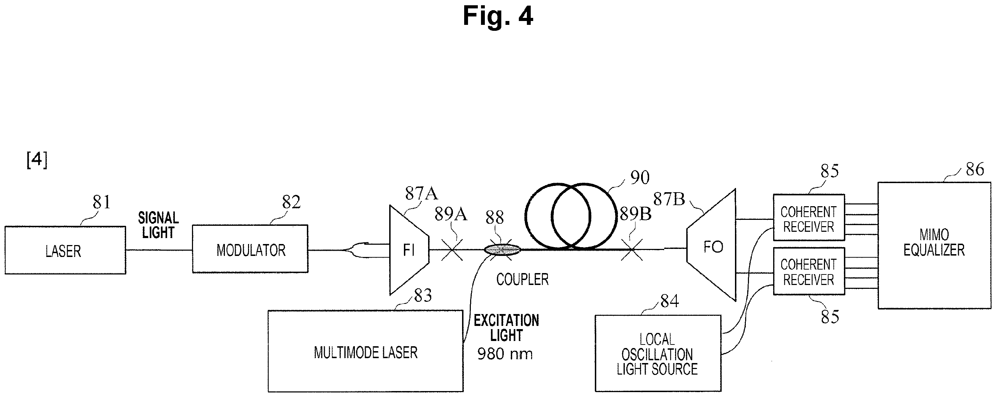

Fig. 4 illustrates a configuration example of an MDG measurement system regarding the EDF 90. To the input/output ends of the EDF 90, a fan-in (FI) device 87A and a fan-out (FO) device 87B for injecting light into each core 91 of the EDF 90 are connected. In the evaluation of inter-mode characteristic differences, a multi-level phase modulation signal such as quadrature phase shift keying (QPSK) is generated using a laser 81 and a modulator 82, local light from a local oscillation light source 84 is coherently received by a coherent receiver 85, and digital signal processing is performed in a multiple input multiple output (MIMO) equalizer 86. The MIMO equalizer 86 estimates a channel matrix of the part of the EDF 90 and calculates $20\log10$ $(\lambda_{max}/\lambda_{min})$ from the maximum value $\lambda_{max}$ and the minimum value $\lambda_{min}$ of a calculated singular value $\lambda_m$. Accordingly, the MDG in the EDF 90 can be measured. In addition, a localization ratio $|\Gamma e/\Gamma o|$ between an even mode and an odd mode in the EDF 90 can also be measured.

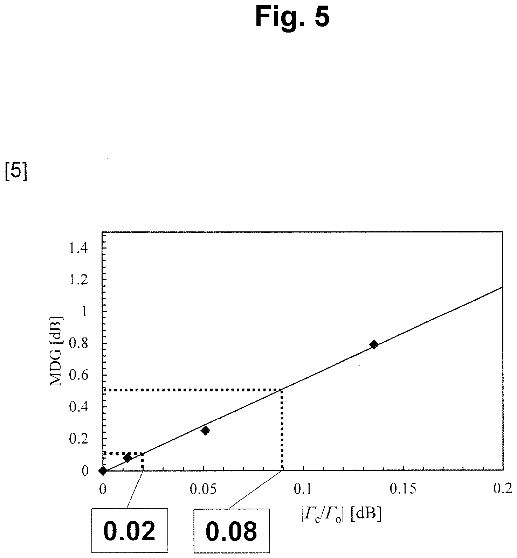

Fig. 5 illustrates MDG calculation results. The horizontal axis indicates the localization ratio $|\Gamma e/\Gamma o|$ between an even mode and an odd mode, and the vertical axis indicates the MDG. Both values are in dB. As illustrated in the figure, it can be ascertained that the MDG increases approximately in proportion to the localization ratio under certain conditions. Satisfaction of MDG < 0.1 dB requires that the localization ratio should satisfy $|\Gamma e/\Gamma o|$ < 0.02 dB. Further, satisfaction of MDG < 0.5 dB requires $|\Gamma e/\Gamma o|$ < 0.08 dB.

Mode coupling in the EDF 90 is not taken into account. In simulations, the EDF 90 having an Er ion density of 100 ppm is used, excitation light of 4 W is output from a multimode laser 83 functioning as an excitation light source, and is injected into the clad of the EDF 90 via the coupler 88, and thus signal light of -25 dBm/core from the laser 81 is excited in the EDF 90. In addition, step index cores 91 having a core radius of 4.5 um, a relative refractive index difference of 0.35%, a clad diameter of 125 um, and a core pitch $\Lambda$ of 16, 20, 25, and 40 um were used.

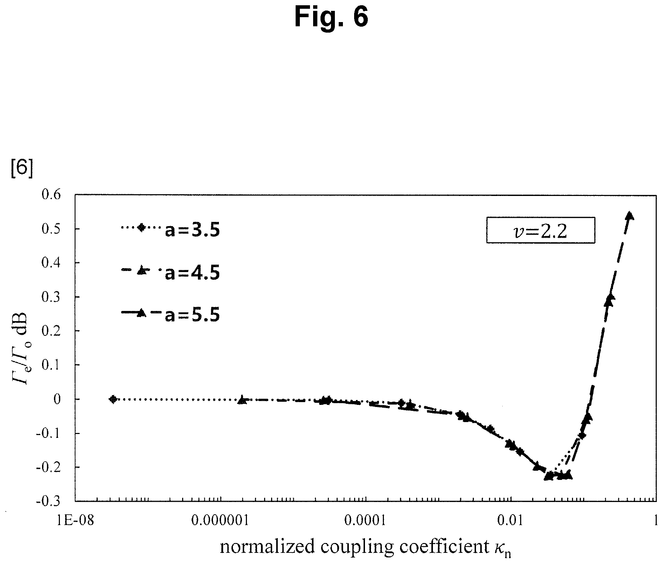

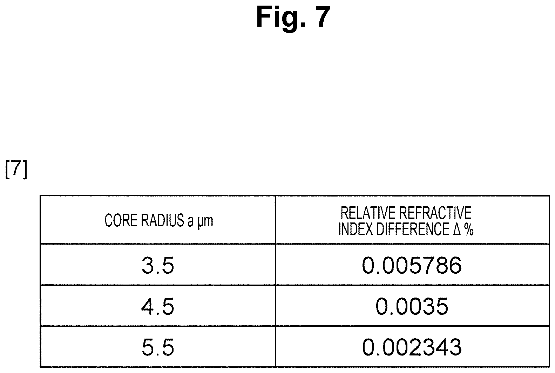

Fig. 6 illustrates a relationship between a localization ratio and a normalized coupling coefficient $\kappa_n$ in a linear state. The v value was fixed and set to 2.2, and $\kappa_n$ was changed by changing the core pitch $\Lambda$ in each of the three types of core structures as illustrated in Fig. 7. When the v value is constant, the localization ratio can be ascertained to be determined by the normalized coupling coefficient $\kappa_n$ even in different core structures.

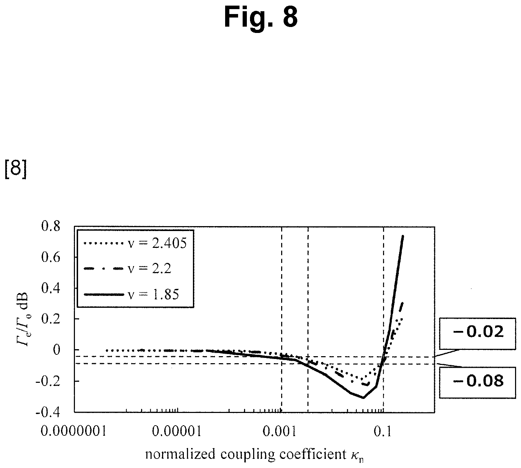

Fig. 8 illustrates the relationship between the localization ratio and the normalized coupling coefficient $\kappa_n$ in a plurality of examples regarding the v value. The range satisfying $|\Gamma e/\Gamma o|$ < 0.08 dB in a linear state is a region of $\kappa_n$ < 8.0 × $10^{-3}$, and the range is limited. Further, the range satisfying $|\Gamma e/\Gamma o|$ < 0.02 dB in a linear state is a region of approximately $\kappa_n$ < 1.0 × $10^{-3}$, and the range is further limited.

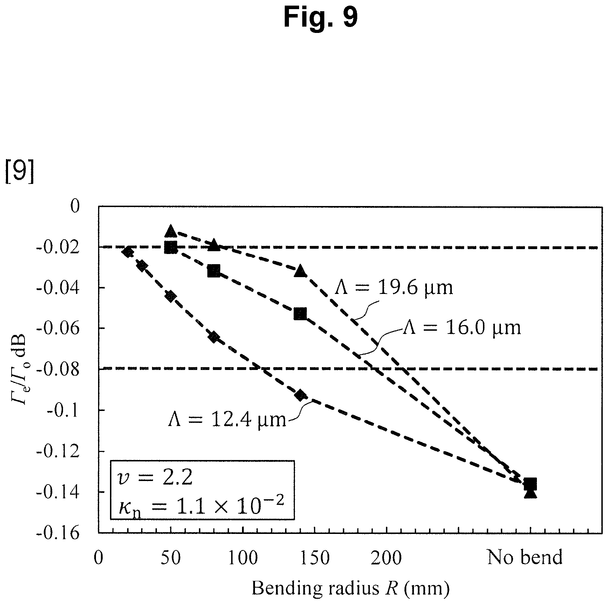

Fig. 9 illustrates a relationship between a bending radius R and a localization ratio $|\Gamma e/\Gamma o|$ at a certain v value and $\kappa_n$. In this example, a condition in which the v value is 2.2, the normalized coupling coefficient $\kappa_n$ is 1.1 × $10^{-2}$, and the core pitch $\Lambda$ is 12.4, 16.0, and 19.6 um is illustrated.

As illustrated in Fig. 9, as the bending radius R decreases, the localization ratio $|\Gamma e/\Gamma o|$ decreases. Therefore, the localization ratio $|\Gamma e/\Gamma o|$ and the MDG can be ascertained to be reducible by means of suitable control of the bending radius R in the core structure in which $|\Gamma e/\Gamma o|$ is high in a linear state, that is, in the region of $\kappa_n \geq 1.0 \times 10^{-3}$.

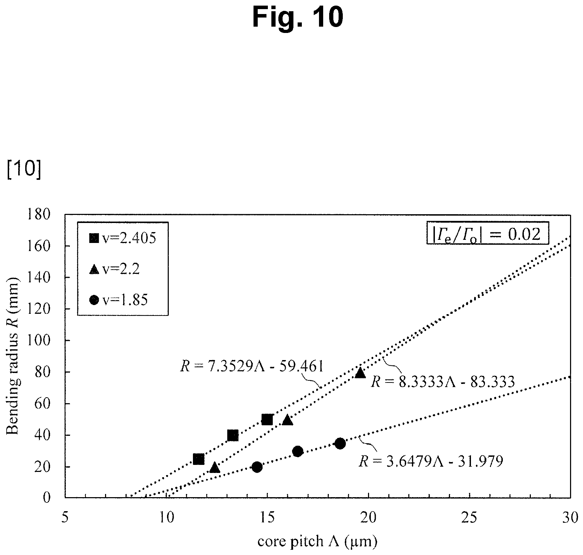

Fig. 10 illustrates a relationship between the core pitch $\Lambda$ and the bending radius R satisfying $|\Gamma e/\Gamma o|$ = 0.02 dB. Examples, in which the v value is set to 2.405, 2.2, and 1.85 separately, were plotted. All normalized coupling coefficients were calculated as $\kappa_n$ = 1.1 × $10^{-2}$. The bending radius R at each v value can be represented by the following straight lines.

- v value = 2.405: R = 7.3529$\Lambda$ - 59.461
- v value = 2.2: R = 8.3333$\Lambda$ - 83.333
- v value = 1.85: R = 3.6479$\Lambda$ - 31.979

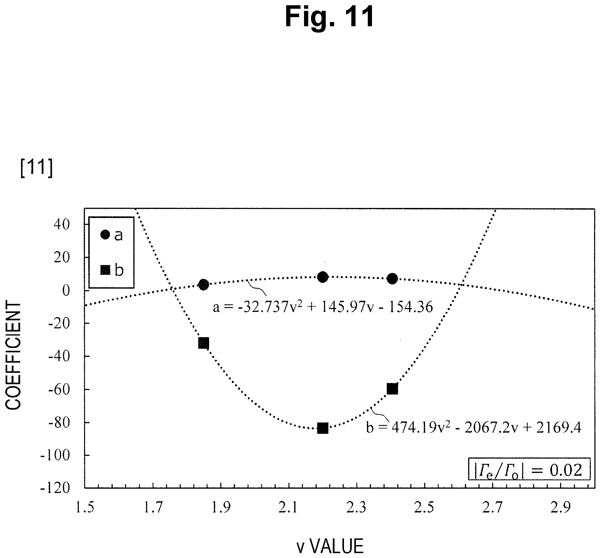

In Fig. 10, $|\Gamma e/\Gamma o|$ < 0.02 dB can be obtained in a region below any of the straight lines, and an MDG of 0.1 dB or less can be achieved. The straight lines in Fig. 10 represent Expression (2) using the v value and $\Lambda$. Here, coefficients a and b in Expression (2) can be calculated as follows by fitting as illustrated in Fig. 11.

$$R = a\Lambda + b \quad (2)$$

$$a = -32.737v^2 + 145.97v - 154.36$$

$$b = 474.19v^2 - 2067.2v + 2169.4$$

Therefore, by controlling the bending radius R within a range satisfying Expression (2), the MDG can be restricted to 0.1 dB or less.

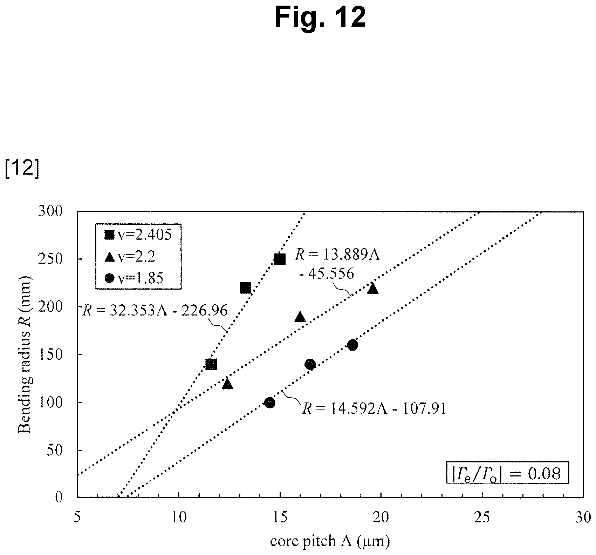

Similarly, Fig. 12 illustrates a relationship between the core pitch $\Lambda$ and the bending radius R satisfying $|\Gamma e/\Gamma o|$ = 0.08 dB. The bending radius R at each v value can be represented by the following straight lines.

- v value = 2.405: R = 32.353$\Lambda$ - 226.96
- v value = 2.2: R = 13.889$\Lambda$ - 45.556
- v value = 1.85: R = 14.592$\Lambda$ - 107.91

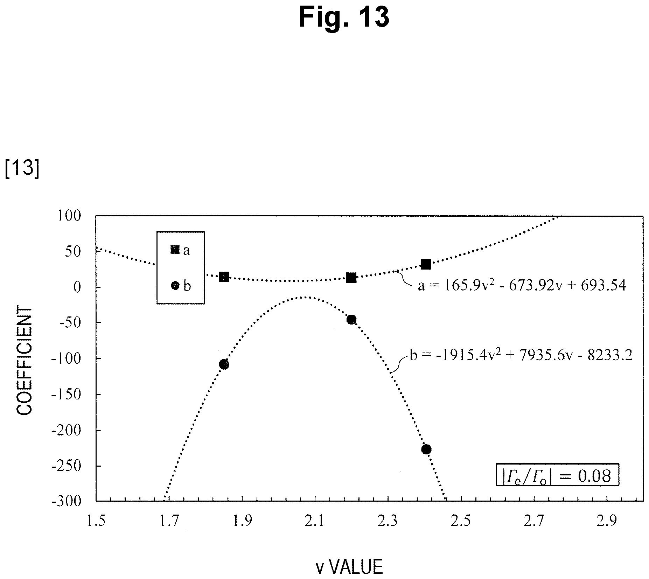

In Fig. 12, $|\Gamma e/\Gamma o|$ < 0.08 dB can be obtained in a region below any of the straight lines, and an MDG of 0.5 dB or less can be achieved. The straight lines in Fig. 12 represent Expression (3) using the v value and $\Lambda$. Here, the coefficients a and b in Expression (3) can be calculated as follows by fitting as illustrated in Fig. 13.

$$R = a\Lambda + b \quad (3)$$

$$a = 165.9v^2 + 673.92v - 693.54$$

$$b = -1915.4v^2 - 7935.6v + 8233.2$$

Therefore, by controlling the bending radius R within a range satisfying Expression (3), the MDG can be restricted to 0.5 dB or less.

According to the present disclosure, a fiber structure and a control range of the bending radius R for restricting the MDG to a sufficiently small value have been clarified. Therefore, by adopting the optical amplifier 74 of the present disclosure, it is practical to provide an optical amplifier of a coupled MCF having low MDG characteristics.

Although an example in which the normalized coupling coefficient $\kappa_n$ is $1.1 \times 10^{-2}$ has been illustrated in the present embodiment, the present disclosure is not limited thereto. For example, the present disclosure is applicable to any value of normalized coupling coefficient $\kappa_n$ equal to or more than $1.1 \times 10^{-3}$ in order to adjust the localization ratio in a bent state. However, when the normalized coupling coefficient $\kappa_n$ is 0.1 or more, the cores 91 are in contact with each other as can be ascertained from Fig. 8, and thus the normalized coupling coefficient $\kappa_n$ is preferably less than 0.1.

Further, although an example in which the rare-earth doped fiber 90 is a two-core EDF has been illustrated in the present embodiment, the present disclosure is not limited thereto. For example, the present disclosure is not limited to an EDF, and any rare-earth doped fiber may be used. In addition, the above-described design method may be applied to a rare-earth doped fiber having three or more cores.

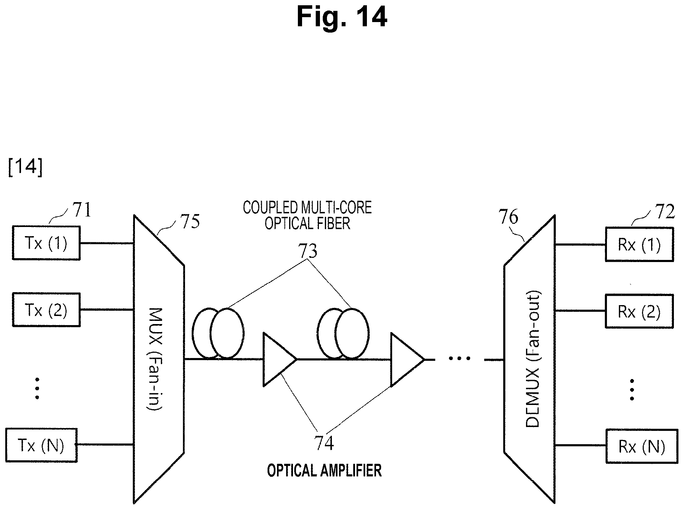

Fig. 14 illustrates a configuration example of a transmission system to which the optical amplifier of the present disclosure is applied. The transmission system of the present disclosure is a space division multiplexing transmission system that transmits signal light from a plurality of optical transmitters 71 to a plurality of receivers 72 using space division multiplexing transmission such as mode division multiplexing. In the space division multiplexing transmission system of the present disclosure, a MUX 75 that performs fan-in and a DEMUX 76 that performs fan-out are connected to each other via a coupled MCF 73. As illustrated in Fig. 1, the optical amplifier 74 of the present disclosure amplifies each signal light transmitted through the coupled MCF 73 in a state of being bent at a bending radius R.

As described above, the optical amplifier 74 of the present disclosure can amplify the space division multiplexed light transmitted through the coupled MCF 73, with low mode-dependent gain characteristics, in the space division multiplexing transmission system. Therefore, the present disclosure can realize long-distance transmission by the coupled MCF 73.

Industrial Applicability

The present disclosure can be applied to the information communication industry.

Reference Signs List

| | |
|---|---|
| 71 | Transmitter |
| 72 | Receiver |
| 73 | Coupled MCF |
| 74 | Optical amplifier |
| 75 | MUX |
| 76 | DEMUX |
| 81 | Laser |
| 82 | Modulator |
| 83 | Multimode laser |
| 84 | Local oscillation light source |
| 85 | Coherent receiver |
| 86 | MIMO equalizer |
| 87A | Fan-in device |
| 87B | Fan-out device |
| 88 | Coupler |

| | |
|---|---|
| 89A, 89B | Isolator |
| 90 | Rare-earth doped fiber |
| 91 | Core |
| 92 | Clad |

**Claims**

1. A rare-earth doped fiber including a plurality of cores,
   wherein

   a v value of the plurality of cores is less than 2.405, and
   the plurality of cores has a core pitch of a normalized coupling coefficient of $1.0 \times 10^{-3}$ or more.

2. An optical amplifier comprising the rare-earth doped fiber according to claim 1,
   wherein the optical amplifier amplifies propagating light in the rare-earth doped fiber, with mode-dependent gain characteristics dependent on a predetermined bending radius, on injection of excitation light into a clad part of the rare-earth doped fiber in a state of being bent at the bending radius.

3. A method of controlling the optical amplifier according to claim 2, the method comprising reducing the mode-dependent gain characteristics by bending at the predetermined bending radius.

4. The method according to claim 3, wherein the rare-earth doped fiber is a two-core erbium doped fiber having a core pitch A,
   the method comprising controlling a bending radius R based on the following expression to keep the mode-dependent gain characteristics 0.1 dB or less:

$$R = a\Lambda + b$$

$$a = -32.737v^2 + 145.97v - 154.36$$

$$b = 474.19v^2 - 2067.2v + 2169.4$$

   where v is the v value of the plurality of cores.

5. The method according to claim 3, wherein the rare-earth doped fiber is a two-core erbium doped fiber having a core pitch A,
   the method comprising controlling a bending radius R based on the following expression to keep the mode-dependent gain characteristics 0.5 dB or less:

$$R = a\Lambda + b$$

$$a = 165.9v^2 + 673.92v - 693.54$$

$$b = -1915.4v^2 - 7935.6v + 8233.2$$

   where v is the v value of the plurality of cores.

# Fig. 1

[1]

90

R

Λ

91    91

92

RARE-EARTH
DOPED FIBER

90

88

SIGNAL LIGHT

EXCITATION
LIGHT

74
OPTICAL AMPLIFIER

EP 4 475 357 A1

# Fig. 2

[2]

# Fig. 3

[3]

**Fig. 4**

# Fig. 5

[5]

# Fig. 6

[6]

Legend: a=3.5, a=4.5, a=5.5, $v=2.2$

Y-axis: $\Gamma_e/\Gamma_o$ dB

X-axis: normalized coupling coefficient $\kappa_n$

# Fig. 7

[7]

| CORE RADIUS a µm | RELATIVE REFRACTIVE INDEX DIFFERENCE Δ % |
|---|---|
| 3.5 | 0.005786 |
| 4.5 | 0.0035 |
| 5.5 | 0.002343 |

# Fig. 8

[8]

**Fig. 9**

[9]

# Fig. 10

[10]

# Fig. 11

[11]

# Fig. 12

[12]

# Fig. 13

[13]

# Fig. 14

[14]

<table>
<tr><td colspan="2"><strong>INTERNATIONAL SEARCH REPORT</strong></td><td>International application No.<br><br>**PCT/JP2022/004159**</td></tr>
</table>

| A. | CLASSIFICATION OF SUBJECT MATTER |
|---|---|

*H01S 3/067*(2006.01)i
FI: H01S3/067

According to International Patent Classification (IPC) or to both national classification and IPC

| B. | FIELDS SEARCHED |
|---|---|

Minimum documentation searched (classification system followed by classification symbols)

H01S3/067

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020/067383 A1 (SUMITOMO ELECTRIC INDUSTRIES, LTD.) 02 April 2020 (2020-04-02)<br>  paragraphs [0013]-[0030], fig. 1-3 | 1-3 |
| A | | 4-5 |
| Y | JP 2019-75450 A (SUMITOMO ELECTRIC INDUSTRIES, LTD.) 16 May 2019 (2019-05-16)<br>  paragraphs [0002]-[0004], [0025]-[0028], fig. 1-2 | 1-3 |
| A | | 4-5 |
| Y | JP 2014-67053 A (IMRA AMERICA INC.) 17 April 2014 (2014-04-17)<br>  paragraph [0029] | 1-3 |
| A | | 4-5 |
| A | JP 2017-161705 A (SUMITOMO ELECTRIC INDUSTRIES, LTD.) 14 September 2017 (2017-09-14)<br>  entire text, all drawings | 1-5 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004159**

C.    DOCUMENTS CONSIDERED TO BE RELEVANT

| Category* | Citation of document, with indication, where appropriate, of the relevant passages | Relevant to claim No. |
|---|---|---|
| A | JP 2017-72818 A (SUMITOMO ELECTRIC INDUSTRIES, LTD.) 13 April 2017 (2017-04-13)<br>entire text, all drawings | 1-5 |
| A | JP 4-86728 A (FUJITSU LIMITED) 19 March 1992 (1992-03-19)<br>entire text, all drawings | 1-5 |

EP 4 475 357 A1

| INTERNATIONAL SEARCH REPORT | International application No. |
| :-- | :-- |
| Information on patent family members | **PCT/JP2022/004159** |

| Patent document cited in search report | | | Publication date (day/month/year) | Patent family member(s) | | | Publication date (day/month/year) |
| :-- | :-- | :-- | :-- | :-- | :-- | :-- | :-- |
| WO | 2020/067383 | A1 | 02 April 2020 | CN | 112740490 | A | |
| | | | | paragraphs [0032]-[0051], fig. 1-3 | | | |
| JP | 2019-75450 | A | 16 May 2019 | US | 2019/0115715 | A1 | |
| | | | | paragraphs [0002]-[0007], [0028]-[0035], fig. 1-2 | | | |
| | | | | GB | 2569216 | A | |
| | | | | FR | 3072511 | A | |
| | | | | CN | 109672074 | A | |
| JP | 2014-67053 | A | 17 April 2014 | US | 2005/0157998 | A1 | |
| | | | | paragraph [0094] | | | |
| | | | | US | 2008/0056656 | A1 | |
| | | | | WO | 2005/070170 | A2 | |
| JP | 2017-161705 | A | 14 September 2017 | US | 2017/0261685 | A1 | |
| | | | | entire text, all drawings | | | |
| | | | | US | 2018/0299613 | A1 | |
| | | | | CN | 107179581 | A | |
| JP | 2017-72818 | A | 13 April 2017 | US | 2017/0102501 | A1 | |
| | | | | entire text, all drawings | | | |
| | | | | WO | 2017/061184 | A1 | |
| | | | | EP | 3361296 | A1 | |
| | | | | CN | 108027474 | A | |
| JP | 4-86728 | A | 19 March 1992 | US | 5155621 | A | |
| | | | | entire text, all drawings | | | |
| | | | | EP | 470497 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. SAKAMOTO et al.** Characteristics of Randomly Coupled 12-core Erbium-Doped Fiber Amplifier. *J. Light. Technol.*, 2021, vol. 39 (4), 1186-1193